# EUROPEAN PATENT APPLICATION

(11) **EP 1 684 037 A1**
(43) Date of publication of application: **26.07.2006**
(21) Application number: 04792433.7
(22) Date of filing: 15.10.2004
(51) Int. Cl.: F25D 11/00

(54) **DRINKING WATER SUPPLY DEVICE**

(30) Priority: 15.10.2003 JP 2003355228
(71) Applicant: Sanden Corporation, Isesaki-shi, Gunma 372-8502 (JP)
(72) Inventor: WATANABE, Kazushige, c/o SANDEN CORPORATION, Isesaki-shi, Gunma 3728502 (JP); SATO, Motoharu, c/o SANDEN CORPORATION, Isesaki-shi, Gunma 3728502 (JP); ITO, Miwako, c/o SANDEN CORPORATION, Isesaki-shi, Gunma 3728502 (JP)
(74) Representative: Haley, Stephen
(86) International application number: PCT/JP2004/015216
(87) International publication number: WO 2005/038363

(57) **Abstract**

An apparatus for supplying drinking water comprising a container (1) in which drinking water such as natural water or tap water is accommodated and which is arranged detachably; a water cooler (22) which cools drinking water supplied from the container (1); a sterilizer (5) which is installed in the water cooler (22) and sterilizes drinking water in the water cooler (22); a cold water valve (23) which controls supplying operation and stopping operation for drinking water in the water cooler (22); and a container detector (4) which detects whether or not the container (1) has been detached, wherein, after the container detector (4) has detected a state in which the container (1) has been detached, drives the sterilizer (5) for a predetermined period. This enables bacteria having invaded into the container (1) to be killed in a well-timed way.

## Description

### TECHNICAL FIELD

The present invention relates to an apparatus for supplying drinking water for cooling or heating drinking water, such as natural water, and supplying it.

### BACKGROUND ART

As a conventional apparatus for supplying drinking water of this kind, what is described in Japanese Patent Laid-Open No. 8-230993 is known.

This apparatus for supplying drinking water has a detachable cold water tank and a hot water tank communicating with the cold water tank. A cooling device for cooling the water in the tank is installed in the cold water tank, while a heater for heating the water in the tank is installed in the hot water tank. When a cold water valve is opened, cold water in the cold water tank is poured, while hot water in the hot water tank is poured when a hot water valve is opened.

The apparatus for supplying drinking water also has a bacterial filter and a circulating pump. During standby for water pouring, the circulating pump is driven all the time thereby to have the water in the cold water tank pass the bacterial filter to prevent bacteria from multiplying in the cold water tank.

Patent Document 1: Japanese Patent Publication No. 8-230993

### DISCLOSURE OF THE INVENTION

### PROBLEMS TO BE SOLVED BY THE INVENTION

However, not only the circulating pump but also piping for circulating water has to be installed between the cold water tank and the bacterial filter in this apparatus for supplying drinking water. Therefore, it involves problems that the piping circuit for drinking water is made complex and the whole apparatus is increased in size.

Moreover, since the circulating pump is driven all the time during standby for drinking water pouring, the running cost of the apparatus for supplying drinking water is made correspondingly higher.

Furthermore, an apparatus for supplying drinking water is used in which drinking water to be supplied to the hot water tank is once cooled in the cold water tank. As a result, when hot water of the desired temperature is generated in the hot water tank, much more heat from the heat is required than when hot water is generated by heating drinking water of normal temperature, which is a disadvantage in energy conservation.

In view of the above-noted problems with the conventional apparatus, an object of the present invention is to provide an apparatus for supplying drinking water which can dispense with a circulating pump and a circulating path for purifying drinking water and, because sterilization if performed at a more likely timing for bacteria to come in, can efficiently purify drinking water.

### MEANS FOR SOLVING THE PROBLEMS

An apparatus for supplying drinking water according to the invention comprises a container in which drinking water such as natural water or tap water is accommodated and which is arranged detachably; a water cooler which cools drinking water supplied from the container; a sterilizer which is installed in the water cooler and sterilizes drinking water in the water cooler; a cold water valve which controls supplying operation and stopping operation for drinking water in the water cooler; container detecting means which detects whether or not the container has been detached; and control means which, after the container detecting means has detected a state in which the container has been detached, drives the sterilizer for a predetermined period.

### ADVANTAGES OF THE INVENTION

According to the invention, since the sterilizer is driven when in a state in which the container has been removed, namely in a situation in which bacteria can easily invade into the water cooler from outside, the invading bacteria can be killed in a well-timed way.

### BRIEFLY DESCRIBE OF THE DRAWINGS

Figure 1 is a schematic section of an apparatus for supplying drinking water according to a first embodiment;
Figure 2 is a block diagram showing the drive control circuit of a according to the first embodiment;
Figure 3 is a drive control flow chart for the sterilizer according to the first embodiment;
Figure 4 is a block diagram showing the drive control circuit of a sterilizer according to a second embodiment;
Figure 5 is a drive control flow chart for the sterilizer according to the second embodiment;
Figure 6 is a block diagram showing the drive control circuit of a sterilizer according to a third embodiment;
Figure 7 is a drive control flow chart for the sterilizer according to the third embodiment;
Figure 8 is a schematic section of an apparatus for supplying drinking water according to a fourth embodiment;
Figure 9 is a schematic section of an apparatus for supplying drinking water according to a fifth embodiment;
Figure 10 is a schematic section of an apparatus for supplying drinking water according to a sixth embodiment;
Figure 11 is a schematic section of an apparatus for supplying drinking water according to a seventh embodiment;
Figure 12 is a schematic section of an apparatus for supplying drinking water according to an eighth embodiment; and
Figure 13 is a schematic section of an apparatus for supplying drinking water according to a ninth embodiment.

### DESCRIPTION SYMBOLS

- 1: Container
- 2: Drinking water supply system
- 4: Container detector
- 5: Sterilizer
- 6: Microcomputer
- 7: Sterilization period setting switch
- 8: Sterilization time setting switch
- 9: Sterilization interval setting switch
- 22: Water cooler
- 23: Cold water valve
- 25: Water heater
- 26: Hot water valve
- 27: Reserve tank
- 28: Bacteria remover
- 211a: Common pipe
- 211b: Cold water pipe
- 211c: Hot water pipe

### BEST MODE FOR CARRYING OUT THE INVENTION

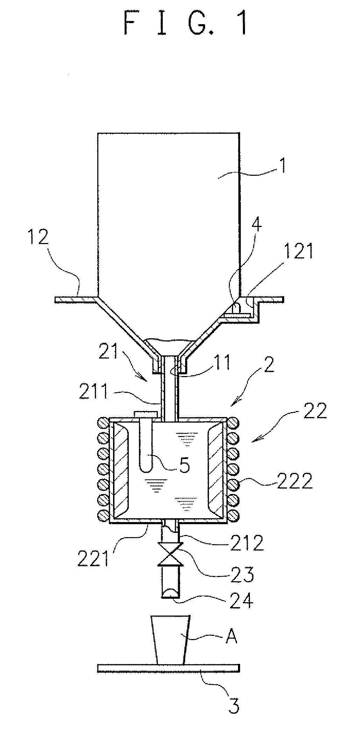

Figure 1 through Figure 3 show a first embodiment of an apparatus for supplying drinking water according to the present invention.

First, the schematic configuration of the apparatus for supplying drinking water will be described with reference to Figure 1. The apparatus for supplying drinking water has a container 1 for storing drinking water, such as mineral water or tap water, a drinking water supply system 2 connected to the container 1, and a receiver unit 3 for receiving drinking water poured from the drinking water supply system 2 with a cup A. Although the apparatus for supplying drinking water also has other units of equipment, such as a cooling device, than these units 1 through 3, only those structural parts relevant to the invention are shown in Figure 1.

A bottle or a tank having a water outlet 11 at one end is used as the container 1. The container 1 is installed, with its water outlet 11 held upside down, on a supporting base 12, and lets drinking water be poured from this water outlet 11.

The drinking water supply system 2 comprises a water piping unit 21 consisting of upper and lower water pipes 211 and 212, a water cooler 22, a cold water valve 23 and a nozzle unit 24. The upper end of this upper water pipe 211 is connected to the water outlet 11 of the container 1, and the lower end of the upper water pipe 211 is connected to the water cooler 22. Though not shown, an air intake pipe with a non-return valve is provided in the upper part of the upper water pipe 211. External air is let into the container 1 through this air intake pipe. The upper end of the lower water pipe 212 is connected to the water cooler 22, and the lower end of the lower water pipe 212 is connected to the nozzle unit 24. The cold water valve 23 is installed midway on the lower water pipe 212. The cold water valve 23 may be either manual or automatic. If the cold water valve 23 is manual, it will be a keying cock. Or if the cold water valve 23 is automatic, it will be an electromagnetic valve opened or closed with a water supply signal or a water stop signal from a controller not shown.

A coiled evaporator 222 is installed on the outer surface of the tank unit 221 of the water cooler 22. Refrigerant circulates into the coiled evaporator 222 from a refrigerating device not shown to cool the inside of the tank unit 221. As the upper water pipe 211 is connected to the tank unit 221, it is supplied with drinking water from the container 1 through the upper water pipe 211. This causes the drinking water to be cooled in the tank unit 221. Also, as the lower water pipe 212 is connected to the tank unit 221, drinking water is let out of the water cooler 22 when the cold water valve 23 is opened, and poured into the cup A on the receiver unit 3 through the nozzle unit 24.

In the apparatus for supplying drinking water configured as described above, a container detector 4 composed of a micro-switch or the like is installed on the supporting base 12. A recess 121 is formed in the part of the upper surface of the supporting base 12 opposing the container 1, and the container detector 4 is installed in this recess 121. As it is sufficient for the container detector 4 to detect whether or not the container 1 is installed on the supporting base 12, it need not be a micro-switch, but anything that can detect the presence or absence of the container 1 through the overlying of the container 1, such as a piezoelectric sensor, would suffice.

Also, there is installed a sterilizer 5 for irradiating the inside of the tank unit 221 of the water cooler 22 with ultraviolet rays. This sterilizer 5 is composed of an ultraviolet ray sterilizer using a mercury lamp, an ultraviolet ray emitting diode sterilizer using an ultraviolet ray emitting diode, or an ultraviolet ray pulse sterilizer which kills bacteria with ultraviolet ray pulse light.

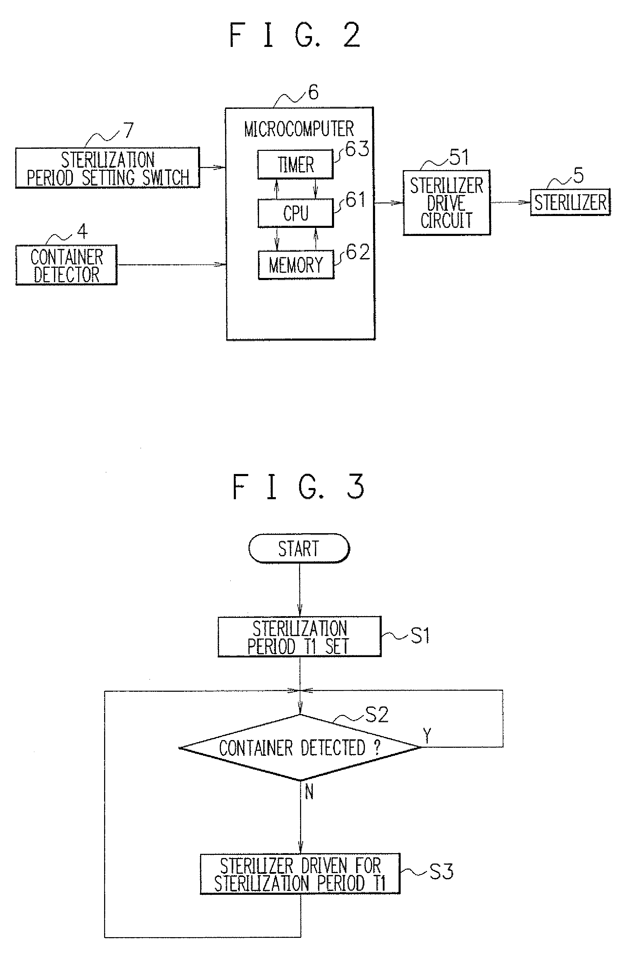

Further, the sterilizer 5 is controlled by a drive circuit shown in Figure 2. Thus, the sterilizer 5 is controlled by a microcomputer 6. A detection signal from the container detector 4 and a time signal from a sterilization period setting switch 7 are inputted to the microcomputer 6. The microcomputer 6 controls a sterilizer drive circuit 51 on the basis of these signals, and the sterilizer drive circuit 51 is also enabled to control the sterilizer 5. The microcomputer 6 is also mounted with a CPU 61, a memory 62 and a timer 63. The memory 62 stores set times set with a sterilization period setting switch 7. The timer 63 measures these set times.

Drive control of the sterilizer according to this embodiment will be described with reference to Figure 3. Thus, a sterilization period T1 (e.g. 60 seconds) is set with the sterilization period setting switch 7 (S1). The CPU 61 determines whether or not the container 1 has been detected on the basis of a signal outputted from the container detector 4 (S2). If the container 1 has been detected, the sterilizer 5 will not be driven but remain in a standby state. On the other hand, if the container 1 is not detected, the CPU 61 will drive the sterilizer 5 over the sterilization period T1 (S3).

In this drive control, if the container 1 is not detected, it will mean that the container 1 has run out of drinking water and the container 1 has been dismounted from the supporting base 12. In such a case, there is a state in which bacteria can easily invade into the water cooler 22 through the upper end of the upper water pipe 211. As the sterilizer 5 is driven at this timing, even if bacterial invade into the water cooler 22, the invading bacterial will be immediately killed to enable the drinking water in the water cooler 22 to be kept sanitary.

Also, as the sterilizer 5 is arranged in the water cooler 22 and a circulating pump and circulation piping are made dispensable, a very simple sterilizing structure is achieved.

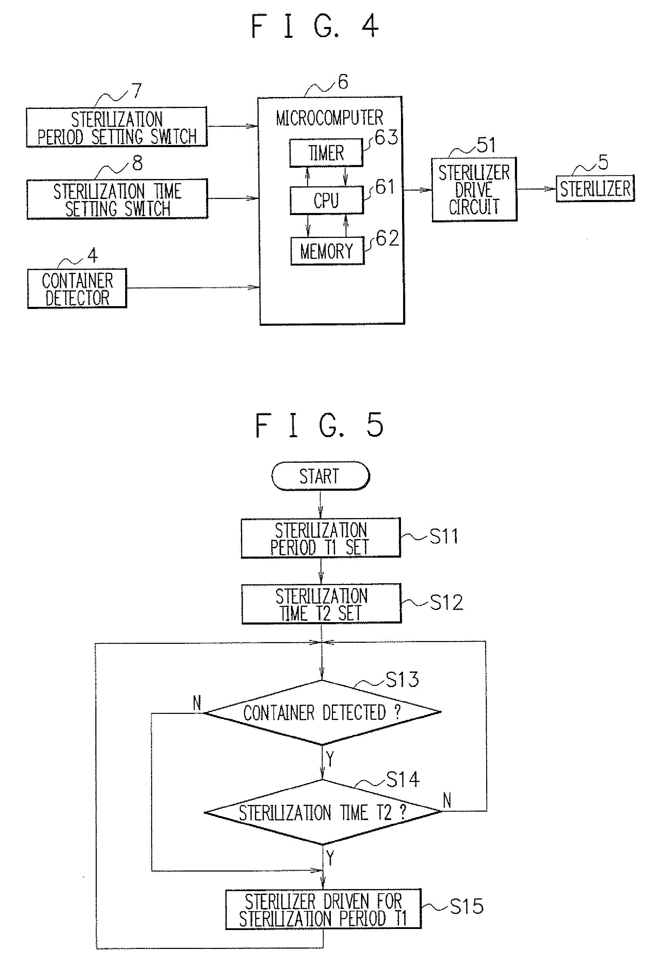

Figure 4 and Figure 5 show a second embodiment of an apparatus for supplying drinking water according to the present invention. In the foregoing first embodiment, the sterilizer 5 is controlled on the basis of a detection signal from the container detector 4. In this embodiment, in addition to this control, there is provided a sterilization time setting switch 8 for setting the drive start time for the sterilizer 5 and the CPU 61 is caused to effect drive control the sterilizer 5 at this set time. Incidentally, the same constituent parts as in the foregoing first embodiment are assigned respectively the same reference signs, and their description will be dispensed with.

The drive control of the sterilizer of the apparatus for supplying drinking water according to this embodiment will be described with reference to Figure 5. First, the sterilization period T1 (e.g. 60 seconds) is set with the sterilization period setting switch 7 (S11). Also a sterilization time T2 is set with the sterilization time setting switch 8 (S12). The CPU 61 determines whether or not the container 1 is detected on the basis of a detection signal from the container detector 4 (S13), and further determines whether or not the sterilization time T2 for the sterilizer 5 has come (S14). If the container 1 has not been detected or if the container 1 has been detected and the sterilization time T2 has come at steps 13 and 14, the CPU 61 will drive the sterilizer 5 over the sterilization period T1 (S15).

In this embodiment, the driving time of the sterilizer 5 can be set to a time when the use of apparatus for supplying drinking water is less frequent, for instance to a time at night when water has been stored in the water cooler 22 for a long period. Therefore, suppression of bacterial multiplication at night can be ensured. Other aspects of configuration and actions are the same as in the above-described first embodiment.

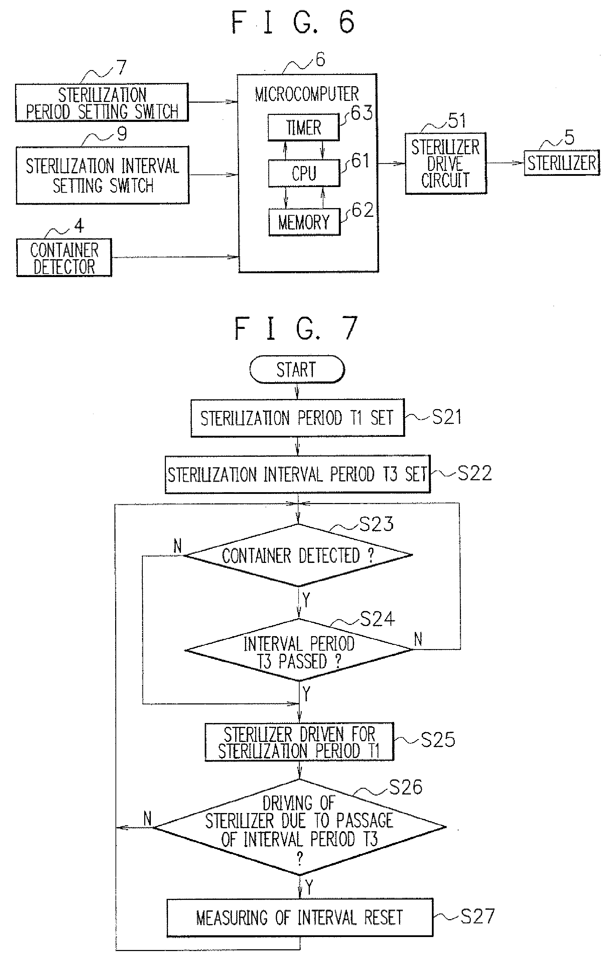

Figure 6 and Figure 7 show a third embodiment of an apparatus for supplying drinking water according to the present invention. In the foregoing first embodiment, the sterilizer 5 is controlled on the basis of the detection signal of the container detector 4. In this embodiment, there is provided a sterilization interval setting switch 9 for setting the time intervals of the sterilizing operation in addition to this control. And the sterilizer 5 is subjected to drive control by this switch 9. Incidentally, the same constituent parts as in the foregoing first embodiment are assigned respectively the same reference signs, and their description will be dispensed with.

The drive control of the sterilizer of the apparatus for supplying drinking water according to this embodiment will be described with reference to Figure 7. First, the sterilization period T1 (e.g. 30 seconds) is set with the sterilization period setting switch 7 (S21). Also, an interval period T3 of the sterilizing operation is set with the sterilization interval setting switch 9 (S22). The CPU 61 determines whether or not the container 1 is detected on the basis of a detection signal from the container detector 4 (S23), and further determines whether or not the interval period T3 has come (S24). If it is determined at steps 23 and 24 that the container 1 has not been detected or if the container 1 has been detected and the interval period T3 has passed, the CPU 61 will drive the sterilizer 5 over the sterilization period T1 (S25). Upon completion of the sterilizing operation by the sterilizer 5, it is determined that the driving of the sterilizer 5 was in accordance with the determination at step 23 (the determination that the container 1 has not been detected) or in accordance with the determination at step 24 (the interval period T3 has passed). If it was in accordance with the determination at step 24, the CPU 61 will reset the measuring time of the timer 63, and the timer 63 will start measuring again (S26 and S27) .

In this embodiment, by setting a fixed interval period (e.g. two hours), drinking water in the water cooler 22 is sterilized at fixed intervals of time, drinking water in the water cooler 22 can be kept sanitary all the time. Other aspects of configuration and actions are the same as in the above-described first embodiment.

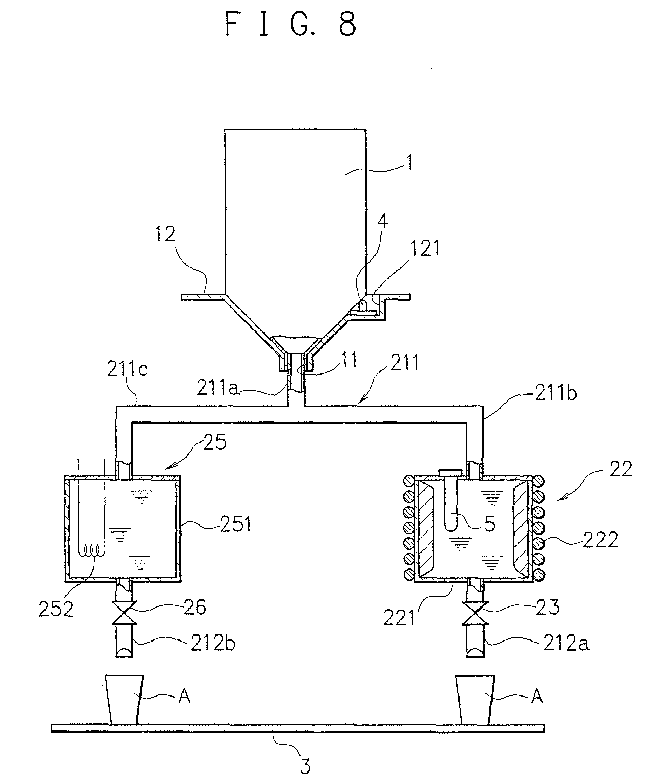

Figure 8 shows a fourth embodiment of an apparatus for supplying drinking water according to the present invention. In the foregoing first embodiment, the structure is intended for supplying only cold water. The apparatus for supplying drinking water in this embodiment is capable of supplying hot water in addition to that. The same constituent parts as in the foregoing first embodiment are assigned respectively the same reference signs, and their description will be dispensed with.

Thus, the upper water pipe 211 is composed of a common pipe 211a connected to the water outlet 11 of the container 1, a cold water pipe 211b branching in one direction out of the lower end of the common pipe 211a, and a hot water pipe 211c branching in the other direction out of the lower end of the common pipe 211a. The water cooler 22 is connected to the lower end of the cold water pipe 211b, and a water heater 25 is connected to the lower end of the hot water pipe 211c.

The water heater 25 has a tank unit 251 capable of storing drinking water, and a heater 252 is arranged in this tank unit 251. Supply of electricity to the heater 252 causes drinking water in the tank unit 251 to be heated to thereby generate hot water.

A lower water pipe 212a equipped with the cold water valve 23 as in the foregoing first embodiment is connected to the tank unit 221 of the water cooler 22. On the other hand, a lower water pipe 212b equipped with a hot water valve 26 is connected to the tank unit 251 of the water heater 25.

In this embodiment, not only cold water but also hot water can be supplied. Further, the water cooler 22 and the water heater 25 are connected in parallel to the container 1 so that, when cold water or hot water is to be generated, there is no thermal influence between them. As a result, when hot water is to be generated, no extra heat energy is required unlike in conventional cases. Other aspects of configuration and actions are the same as in the above-described first embodiment.

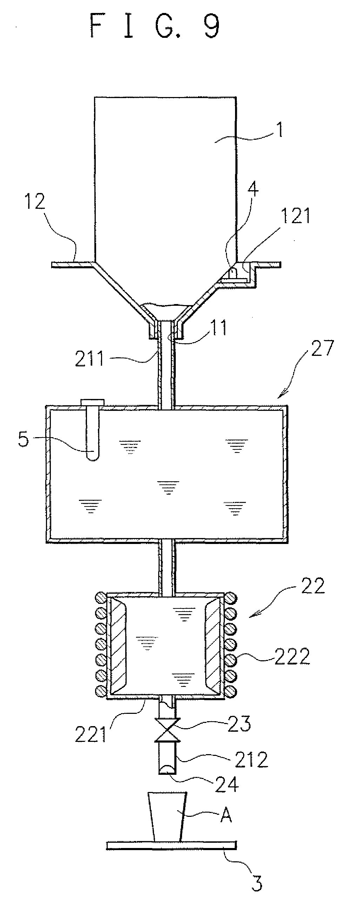

Figure 9 shows a fifth embodiment of an apparatus for supplying drinking water according to the present invention. In the foregoing first embodiment, the structure is intended to guide drinking water in the container 1 directly into the water cooler 22. Unlike that, in this embodiment, the structure is such that a reserve tank 27 is installed on the upper water pipe 211 connecting the water cooler 22 and the container 1. Incidentally, the same constituent parts as in the foregoing first embodiment are assigned respectively the same reference signs, and their description will be dispensed with.

Thus, the reserve tank 27 has a function to temporarily store drinking water guided from the container 1. Also, the sterilizer 5, which is installed on the cooler 22 in the foregoing first embodiment, is installed in the reserve tank 27.

In this embodiment, cold water generated by the water cooler 22 is sterilized in advance in the reserve tank 27, and supplied as drinking water. Other aspects of configuration and actions are the same as in the above-described first embodiment.

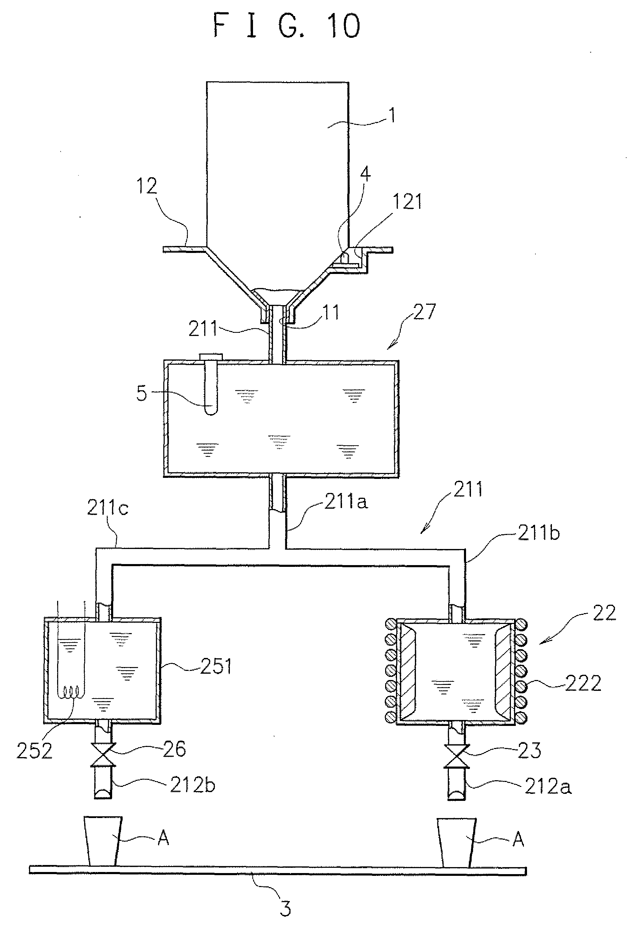

Figure 10 shows a sixth embodiment of an apparatus for supplying drinking water according to the present invention. In the foregoing fifth embodiment, the water cooler 22 is installed downstream from the reserve tank 27. In this embodiment, the water cooler 22 and the water heater 25 similar to that in the fourth embodiment are installed downstream from the reserve tank 27. Incidentally, the same constituent parts as in the foregoing fourth embodiment and fifth embodiment are assigned respectively the same reference signs, and their description will be dispensed with.

Thus, the upper water pipe 211 extended underneath the reserve tank 27 comprises the common pipe 211a connected to the reserve tank 27, the cold water pipe 211b branching in one direction out of the lower end of the common pipe 211a, and the hot water pipe 211c branching in the other direction out of the lower end of the common pipe 211a. The water cooler 22 is connected to the lower end of the cold water pipe 211b, and the water heater 25 is connected to the lower end of the hot water pipe 211c. As in the foregoing fourth embodiment, the lower water pipe 212a equipped with the cold water valve 23 is connected to the water cooler 22, and the lower water pipe 212b equipped with the hot water valve 26 is connected to the water heater 25.

In this embodiment, drinking water stored in the reserve tank 27 is supplied as cold water or hot water as in the foregoing fourth embodiment. Other aspects of configuration and actions are the same as in the above-described fourth embodiment and fifth embodiment.

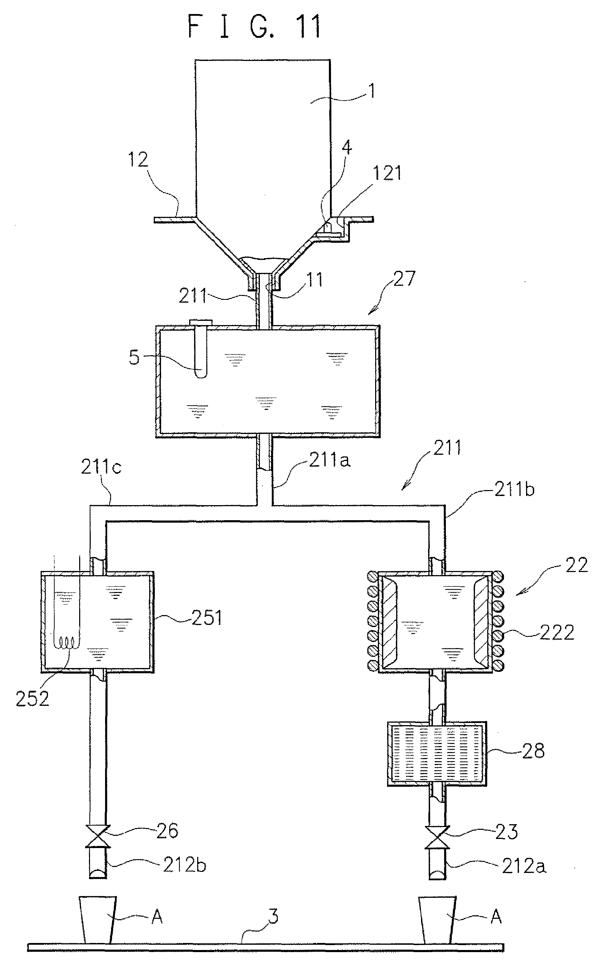

Figure 11 shows a seventh embodiment of an apparatus for supplying drinking water according to the present invention. In the foregoing sixth embodiment, the sterilizer 5 is used as the disinfecting structure for drinking water. Unlike that, the structure in this embodiment has a bacteria remover 28 installed on the lower water pipe 212a connected downstream from the water cooler 22. Incidentally, the same constituent parts as in the foregoing sixth embodiment are assigned respectively the same reference signs, and their description will be dispensed with.

The bacteria remover 28 accommodates within it, for instance, any one of a hollow-fiber filter, a membrane filter and a depth filter or a combination of them. The hollow-fiber filter among them has a function to catch sundry germs. The membrane filter has a structure to catch microorganisms on the surface of the filtering material. The depth filter has a structure to catch microorganisms within the filtering material. By combined use of these different types of filters, a superior bacteria removing function can be exerted. Incidentally, a similar bacteria removing function can obviously be exerted also when something like the aforementioned sterilizer 5 is used instead of using any filtering material.

In this embodiment, bacterial are removed by the sterilizer 5 installed in the reserve tank 27 and further by the bacteria remover 28. Therefore, the purification of drinking water is further improved. Also, bacterial invading from the lower end of the lower water pipe 212a can also be removed by the bacteria remover 28. Although the example shown here of this embodiment has the bacteria remover 28 installed in the apparatus for supplying drinking water in the foregoing sixth embodiment, it can similarly be applied to apparatuses for supplying drinking water in the first through fifth embodiments. Other aspects of configuration and actions are the same as in the above-described sixth embodiment.

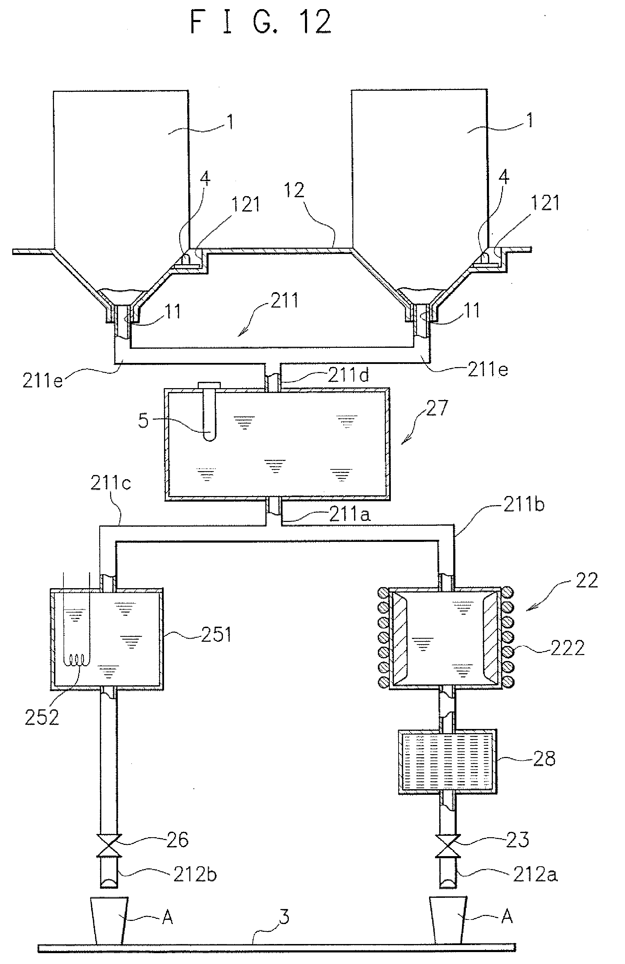

Figure 12 shows an eighth embodiment of an apparatus for supplying drinking water according to the present invention. While only one container 1 is installed in any of the foregoing first through seventh embodiments, a plurality of containers 1 are installed in this embodiment. Incidentally, the same constituent parts as in the foregoing seventh embodiment are assigned respectively the same reference signs, and their description will be dispensed with.

Thus, the supporting base 12 is so formed as to allow parallel installation of two containers 1, and a container detector 4 to detect the presence or absence of each container 1 is installed in each of the recesses 121. Further, the upper water pipe 211 connected to the upper end of the reserve tank 27 has a common pipe 211d and two-way branch pipes 211e. The upper end of each branch pipe 211e is connected to the water outlet 11 of one or the other of the containers 1.

In this embodiment, as water is guided into the reserve tank 27 from each of the containers 1 through each branch pipe 211e and the common pipe 211d, the capacity of drinking water supply is increased. Other aspects of configuration and actions are the same as in the above-described seventh embodiment.

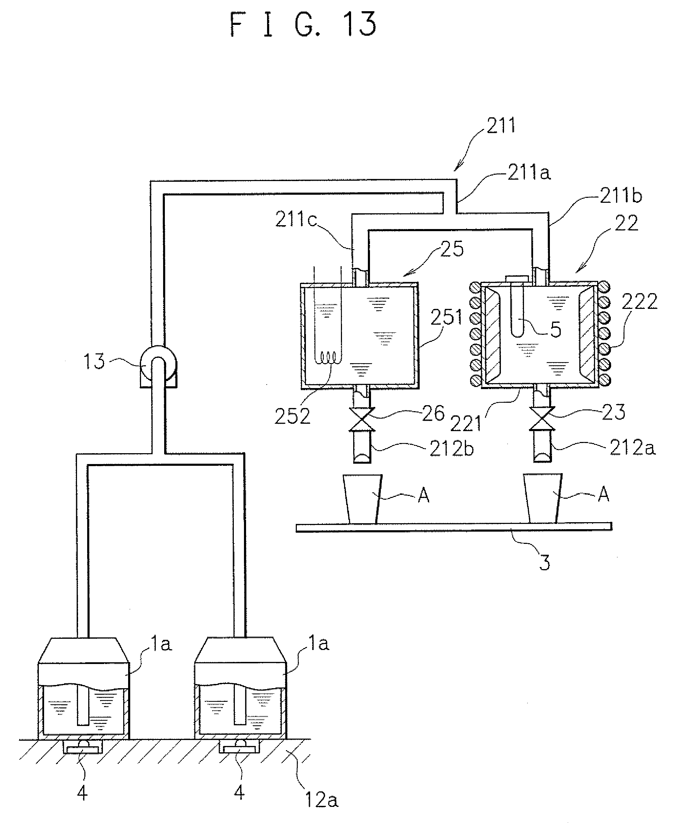

Figure 13 shows a ninth embodiment of an apparatus for supplying drinking water according to the present invention. In the foregoing first through eighth embodiments, drinking water in the container(s) 1 is let flow down by its own weight. Unlike that, in this embodiment, a container 1a is so installed on a supporting base 12a provided with two container detectors 4 as to match one or the other of the container detectors 4. This enables drinking water in each of the containers 1a to be drawn up with a pump 13 and to be supplied to the water cooler 22 and the water heater 25. Thus similar applicable is possible where drinking water in each of the containers 1a is to be drawn up with the pump 13 in this way. Incidentally, the same constituent parts as in the foregoing seventh embodiment are assigned respectively the same reference signs, and their description will be dispensed with.

### INDUSTRIAL APPLICABILITY OF THE INVENTION

The apparatus for supplying drinking water according to the present invention can be used not only for beverage dispensers for commercial use to be applied to the sales of drinking water but also for household drinking water supplying device intended to improve the quality of drinking water at home.

## Claims

1. An apparatus for supplying drinking water comprising:
a container in which drinking water such as natural water or tap water is stored and which is arranged detachably;
a water cooler which is able to cool drinking water guided from said container;
a sterilizer which is installed in said water cooler and is able to sterilize drinking water in the water cooler;
a cold water valve for controlling supplying operation and stopping operation for drinking water in said water cooler;
a container detecting means which is able to detect whether or not said container has been detached; and
a control means which is able to control to drive said sterilizer over a predetermined period when said container detecting means has detected a state in which said container has been detached.

2. The apparatus for supplying drinking water according to claim 1, wherein:
said water cooler has a cold water tank unit in which drinking water is stored.

3. The apparatus for supplying drinking water according to claim 1, further comprising:
a water heater which is arranged in parallel with said water cooler relative to said container and is able to heat drinking water guided from the container, and
a hot water valve for controlling supplying operation and stopping operation for drinking water in said water heater.

4. The apparatus for supplying drinking water according to claim 2, further comprising:
a water heater which is arranged in parallel with said water cooler relative to said container and is able to heat drinking water guided from the container, and
a hot water valve for controlling supplying operation and stopping operation for drinking water in said water heater.

5. The apparatus for supplying drinking water according to claim 3, further comprising:
a common pipe for guiding drinking water in said container, a cold water pipe for guiding drinking water in the common pipe to said water cooler, and
a hot water pipe for guiding drinking water in the common pipe to said water heater.

6. The apparatus for supplying drinking water according to claim 4, further comprising:
a common pipe for guiding drinking water in said container, a cold water pipe for guiding drinking water in the common pipe to said water cooler, and
a hot water pipe for guiding drinking water in the common pipe to said water heater.

7. The apparatus for supplying drinking water according to claim 3, wherein:
said water heater has a hot water tank unit in which drinking water is stored.

8. The apparatus for supplying drinking water according to claim 4, wherein:
said water heater has a hot water tank unit in which drinking water is stored.

9. The apparatus for supplying drinking water according to claim 5, wherein:
said water heater has a hot water tank unit in which drinking water is stored.

10. The apparatus for supplying drinking water according to claim 6, wherein:
said water heater has a hot water tank unit in which drinking water is stored.

11. An apparatus for supplying drinking water comprising:
a container in which drinking water such as natural water or tap water is stored and which is arranged detachably;
a reserve tank which is able to store drinking water guided from said container;
a water cooler which is able to cool drinking water guided from said reserve tank;
a sterilizer which is installed in said reserve tank and is able to sterilize drinking water in the reserve tank;
a cold water valve for controlling supplying operation and stopping operation for drinking water in said water cooler;
a container detecting means which is able to detect whether or not said container has been detached; and
a control means which is able to control to drive said sterilizer over a predetermined period when said container detecting means has detected a state in which said container has been detached.

12. The apparatus for supplying drinking water according to claim 11, wherein:
said water cooler has a cold water tank unit in which drinking water is stored.

13. The apparatus for supplying drinking water according to claim 11, further comprising:
a water heater which is arranged in parallel with said water cooler relative to said reserve tank and is able to heat drinking water guided from the reserve tank, and
a hot water valve for controlling supplying operation and stopping operation for drinking water in said water heater.

14. The apparatus for supplying drinking water according to claim 12, further comprising:
a water heater which is arranged in parallel with said water cooler relative to said reserve tank and is able to heat drinking water guided from the reserve tank, and
a hot water valve for controlling supplying operation and stopping operation for drinking water in said water heater.

15. The apparatus for supplying drinking water according to claim 13, further comprising:
a common pipe for guiding drinking water in said reserve tank, a cold water pipe for guiding drinking water in the common pipe to said water cooler, and
a hot water pipe for guiding drinking water in the common pipe to said water heater.

16. The apparatus for supplying drinking water according to claim 14, further comprising:
a common pipe for guiding drinking water in said reserve tank, a cold water pipe for guiding drinking water in the common pipe to said water cooler, and
a hot water pipe which guides drinking water in the common pipe to said water heater.

17. The apparatus for supplying drinking water according to claim 13, wherein:
said water heater has a hot water tank unit in which drinking water is stored.

18. The apparatus for supplying drinking water according to claim 14, wherein:
said water heater has a hot water tank unit in which drinking water is stored.

19. The apparatus for supplying drinking water according to claim 15, wherein:
said water heater has a hot water tank unit in which drinking water is stored.

20. The apparatus for supplying drinking water according to claim 16, wherein:
said water heater has a hot water tank unit in which drinking water is stored.

21. The apparatus for supplying drinking water according to claim 1, further comprising, downstream from said water cooler:
a bacteria remover which is able to remove bacteria.

22. The apparatus for supplying drinking water according to claim 11, further comprising, downstream from said water cooler:
a bacteria remover which is able to remove bacteria.

23. The apparatus for supplying drinking water according to claim 21, wherein:
said bacteria remover is a filter which is able to catch bacteria or some other sterilizer which is able to kill bacteria.

24. The apparatus for supplying drinking water according to claim 22, wherein:
said bacteria remover is a filter which is able to catch bacteria or some other sterilizer which is able to kill bacteria.

25. The apparatus for supplying drinking water according to claim 1, wherein:
said sterilizer is any one of an ultraviolet ray sterilizer, an ultraviolet ray emitting diode sterilizer and an ultraviolet ray pulse light.

26. The apparatus for supplying drinking water according to claim 11, wherein:
said sterilizer is any one of an ultraviolet ray sterilizer, an ultraviolet ray emitting diode sterilizer and an ultraviolet ray pulse light.

27. The apparatus for supplying drinking water according to claim 23, wherein:
said filter is any one of a hollow-fiber filter, a membrane filter and a depth filter or a combination thereof.

28. The apparatus for supplying drinking water according to claim 24, wherein:
said filter is any one of a hollow-fiber filter, a membrane filter and a depth filter or a combination thereof.

29. The apparatus for supplying drinking water according to claim 1, further comprising:
a sterilization time setting means which is able to set the drive time for said sterilizer, wherein said control means so effects control as to drive the sterilizer at the time set by the sterilization time setting means.

30. The apparatus for supplying drinking water according to claim 11, further comprising:
a sterilization time setting means which is able to set the drive time for said sterilizer, wherein said control means so effects control as to drive the sterilizer at the time set by the sterilization time setting means.

31. The apparatus for supplying drinking water according to claim 1, further comprising:
a sterilization interval setting means which is able to set the drive time intervals of said sterilizer, wherein said control means so effects control as to drive the sterilizer at the intervals set by the sterilization interval setting means.

32. The apparatus for supplying drinking water according to claim 11, further comprising:
a sterilization interval setting means which is able to set the drive time intervals of said sterilizer, wherein said control means so effects control as to drive the sterilizer at the intervals set by the sterilization interval setting means.
